# FASCICULE DE BREVET EUROPEEN

(11) **EP 2 032 419 B1**
(45) Date de publication et mention de la délivrance du brevet: **11.08.2010**
(21) Numéro de dépôt: 07788965.7
(22) Date de dépôt: 06.06.2007
(51) Int. Cl.: B62D 25/04, B62D 25/08, B62D 29/00

(54) **PIECE DE STRUCTURE OBTENUE PAR RABOUTAGE POUR VEHICULE AUTOMOBILE**
MITTELS STUMPFVERBINDUNG ERZEUGTES STRUKTURELEMENT FÜR EIN KRAFTFAHRZEUG
STRUCTURE PART OBTAINED VIA BUTT-JOINING FOR MOTOR VEHICLE

(30) Priorité: 28.06.2006 FR 0652688
(43) Date de publication de la demande: 11.03.2009
(73) Titulaire: Renault S.A.S., 92100 Boulogne-Billancourt (FR)
(72) Inventeur: CRIQUI, Bernard, F-92150 Suresnes (FR)
(86) Numéro de dépôt international: PCT/FR2007/051381
(87) Numéro de publication internationale: WO 2008/000983

(56) Documents cités:
- EP-A- 1 180 470
- EP-A2- 1 348 613
- WO-A-2005/056369
- DE-A1- 10 041 371
- JP-A- 2005 254 282
- JP-A- 2005 271 015

## Description

### DOMAINE TECHNIQUE ET ART ANTÉRIEUR

La présente invention se rapporte à des pièces de structure pour véhicule automobile obtenues par raboutage et un procédé de réalisation de telles pièces.

Actuellement, les pièces de structure de carrosserie susceptibles d'être sollicitées par un choc, par exemple les longerons et les montants, sont généralement fabriquées en tôle d'acier.

Leur épaisseur est fixée de telle sorte qu'elles sont capables d'absorber l'énergie du choc, tout en limitant la déformation en compression et en flexion.

Cependant l'acier a une densité importante. La masse du véhicule ainsi réalisé est donc élevée.

On peut prévoir de réduire l'épaisseur des pièces dans les zones faiblement sollicitées, cependant le gain de masse est limité.

En effet, l'acier a une densité de 7,8, alors que l'aluminium a une densité de 2,7. Il faudrait alors réduire de plus de la moitié l'épaisseur de la pièce en acier pour se rapprocher de la masse d'une pièce en aluminium.

Le raboutage consiste à joindre deux plaques de métal, les deux plaques étant faites du même métal ou alliage métallique ou de deux métaux ou alliages métalliques différents, généralement d'épaisseur différente, par soudage. Cela permet de réaliser des éléments ayant des zones d'épaisseur variable adaptée à la sollicitation à laquelle chaque zone peut être soumise.

Ce procédé est, par exemple utilisé pour réaliser des planchers de véhicule automobile, tels que décrits dans le document DE 197 13 325, ou des tabliers séparant le compartiment moteur de l'habitacle, tels que décrits dans le document US 2005/0076604.

Ce procédé est utilisé pour réaliser des pièces destinées à être visibles ou à des pièces peu sollicitées d'un point de vue mécanique.

Le document WO/2005056369 décrit et représente un pilier de porte d'un habitacle de véhicule automobile, réalisé à partir d'un corps de pilier en acier ou alliage et d'une plaque de base réalisée en métal léger et s'étendant dans une partie inférieure du pilier. Le corps de pilier (8) et la plaque de base sont emboutis et sont assemblés par soudage.

Le document JP 2005 254 282 A décrit une pièce de structure selon le préambule de la revendication 1.

Néanmoins, l'assemblage par soudage d'éléments préalablement emboutis ne permet pas de localiser à volonté les matériaux dans la pièce de manière à bénéficier d'une pièce adaptée à la sollicitation à laquelle chaque zone peut être soumise.

Ceci ne peut être obtenu que si la pièce est réalisée par emboutissage d'une plaque préalablement obtenue par assemblage par raboutage de plaques, chaque plaque est adaptée à la sollicitation à laquelle la forme qu'elle prendra après emboutissage sera soumise.

C'est par conséquent un but de la présente invention d'offrir des pièces de structure pour véhicule automobile de masse réduite, composés d'éléments d'abord raboutés puis emboutis, tout en conservant un haut niveau de sécurité lors des chocs, par exemple les chocs avant, les chocs arrière et les chocs latéraux.

### EXPOSÉ DE L'INVENTION

Le but précédemment énoncé est atteint par une pièce de structure apte à supporter de fortes sollicitations mécaniques, réalisée par raboutage d'au moins un élément en alliage d'aluminium et au moins un élément en acier.

En d'autres termes, la pièce de structure est composite et comporte des zones en acier et des zones en alliages d'aluminium, l'acier et l'alliage d'aluminium étant disposés suivant le type de sollicitations auquel chaque zone est susceptible d'être soumise, afin de réaliser une pièce adaptée à résister aux chocs, tout en réduisant la masse de la pièce.

En effet, certaines sections en alliage d'aluminium offrent des propriétés de résistance en compression comparables à celles de l'acier pour une densité sensiblement moindre, tandis que l'acier offre une résistance en flexion supérieure à celle d'un alliage d'aluminium en raison de son module d'élasticité plus élevé.

Ainsi, l'étude des types de sollicitations mécaniques auxquels les différentes zones de la pièce peuvent être soumises permet d'adapter le matériau, dont les propriétés mécaniques sont suffisantes pour la sollicitation attendue.

On peut donc réduire considérablement la masse de la pièce.

La présente invention a, par conséquent, principalement pour objet une pièce de structure de forme allongée pour véhicule automobile destinée à supporter une importante contrainte mécanique comportant au moins un élément en alliage d'aluminium et au moins un élément en acier solidarisés par raboutage.

La pièce de structure selon l'invention est un montant destiné à être disposé entre deux portières, comportant deux éléments en alliage d'aluminium formant les extrémités inférieure et supérieure du montant destinées à se raccorder respectivement à une extrémité longitudinale d'un plancher et à un pavillon de toit, et l'élément en acier formant la partie médiane du montant.

Dans un exemple de réalisation, l'alliage d'aluminium peut avoir un module d'élasticité d'environ 7GPa et l'acier peut avoir un module d'élasticité d'environ 20 GPa.

Par exemple l'acier est du type HE450M, 650, TRIP 800, DP 800, 1000 ou TWIP, et un alliage d'aluminium du type 6060, 6182, 6008 ou 7005.

La présente invention a également pour objet un véhicule automobile comportant au moins une pièce de structure selon la présente invention.

Le véhicule peut comporter au moins une paire de longerons avant ou arrière selon la présente invention et/ou au moins une paire de montants selon la présente invention.

La présente invention a également pour objet un procédé de fabrication d'une pièce de structure selon la présente invention comportant les étapes :
a) raboutage d'au moins une partie en acier et d'au moins une partie en alliage d'aluminium,
b) emboutissage des parties raboutées.

Lors de l'étape a), deux parties en alliage d'aluminium peuvent être raboutées de part et d'autre de la partie en acier.

L'étape a) de raboutage s'effectue avantageusement par soudage par friction en mode translation.

### BRÈVE DESCRIPTION DES DESSINS

La présente invention sera mieux comprise à l'aide de la description qui va suivre et des dessins annexés, sur lesquels :
- la figure 1 est une vue en perspective d'un véhicule automobile montrant un longeron avant de l'état de la technique,
- la figure 2 est une vue en perspective partiellement éclatée d'un détail d'un véhicule automobile montrant un longeron avant selon la présente invention,
- la figure 3 est une vue en perspective d'un véhicule automobile montrant un montant de l'état de la technique,
- la figure 4 est une vue en perspective partiellement éclatée d'un détail d'un véhicule automobile montrant un montant selon la présente invention,
- la figure 5 est une représentation schématique d'une étape de raboutage.

### EXPOSÉ DÉTAILLÉ DE MODES DE RÉALISATION PARTICULIERS

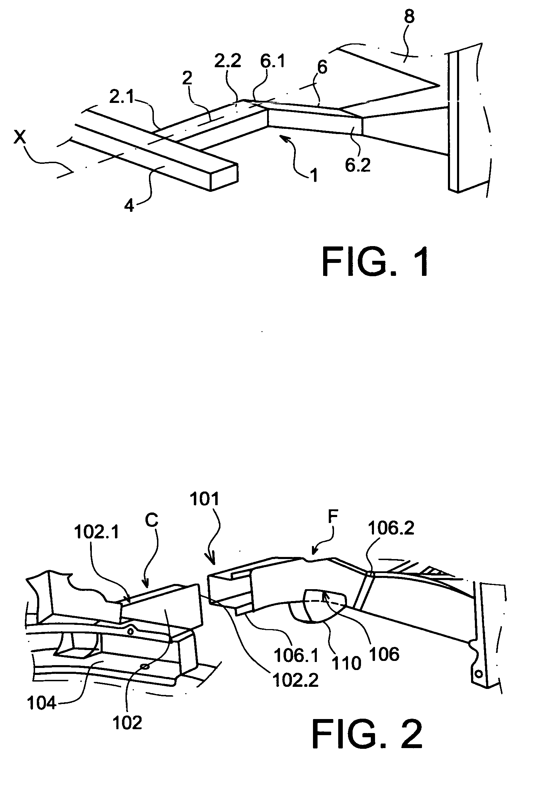

Sur la figure 1, on peut voir un longeron avant de l'état de la technique.

La réglementation impose que le pare-choc d'un véhicule automobile se situe à 500 mm au dessus de la bande de roulement, alors que le plancher d'un véhicule automobile se trouve à 200 mm au dessus de la bande roulement

Ainsi, afin de respecter la réglementation, un longeron avant 1 comporte une partie rectiligne 2 dont une extrémité 2.1 est destinée à être fixée à un pare-choc 4 et une partie coudée 6 fixée par une première extrémité 6.1 à une autre extrémité 2.2 de la partie rectiligne 2 et par une autre extrémité 6.2 à un plancher 8. Le pare-choc 4 se trouve alors au dessus du plancher 8.

En cas de choc frontal, la partie rectiligne 2 est soumise à une contrainte de compression selon son axe longitudinal X et la partie coudée 6 est soumise à un effort de flexion.

On cherche à ce que les longerons se déforment plastiquement et ne se rompent pas. Les matériaux sont donc choisis pour avoir leur limite élastique en dessous de la valeur inférieure de la contrainte de choc et leur limite à la rupture au dessous de la valeur supérieure de la contrainte de choc.

Les contraintes de choc sont généralement comprises entre un intervalle inférieur [250 MPa ; 650 MPa], ce qui correspond à la limite élastique du longeron, et un intervalle de valeurs supérieures [350 MPa ; 1000 Mpa], ce qui correspond à la limite à la rupture du longeron. Ces valeurs sont données à titre indicatif et dépendent de la zone d'application d'effort.

Ainsi un longeron de l'état de la technique est réalisé d'une seule pièce entièrement en acier avec des épaisseurs aptes à supporter des niveaux de contrainte en flexion et en compression donnés. Or un tel longeron a une masse importante.

Un longeron avant selon la présente invention, tel que représenté sur la figure 2, permet de résoudre ce problème.

Le longeron 101 selon la présente invention comporte un premier élément 102 de forme allongée rectiligne réalisé en alliage d'aluminium et un deuxième élément 106 de forme coudée vers le bas en acier, le premier 102 et le deuxième élément 106 se raccordant par raboutage au niveau de leurs extrémités 102.2 et 106.1.

Une autre extrémité 102.1 du premier élément est destinée à se raccorder à un pare-choc avant 104 et une autre extrémité 106.2 du deuxième élément 106 est destinée à se raccorder à un côté de caisse.

Ainsi la zone F pouvant être sollicitée principalement en flexion est réalisée en acier offrant un module d'élasticité élevé de l'ordre de 20GPa. En effet, la résistance à la flexion est proportionnelle au module d'élasticité. Par contre la zone C pouvant être sollicitée principalement en compression, est réalisée en alliage d'aluminium qui offre une résistance à la compression comparable à celle de l'acier. Par contre le module d'élasticité de l'aluminium est de 7 GPa, ce qui le rend inadapté pour résister à une contrainte de flexion importante.

Par ailleurs, l'acier présente une densité de 7.8, tandis que l'aluminium présente une densité de 2.7. Par conséquent un longeron comportant des parties en acier et des parties en alliage d'aluminium présente une masse sensiblement inférieure à celle d'un longeron entièrement en acier.

Le deuxième élément coudé 106 comporte avantageusement une cale de renfort 110, disposée dans le creux du coude.

Le raboutage de l'acier et de l'alliage d'aluminium est réalisé, par exemple par soudage par friction en mode translation par voie semi solide. En effet, l'acier et les alliages d'aluminium ne peuvent être soudés par voie liquide.

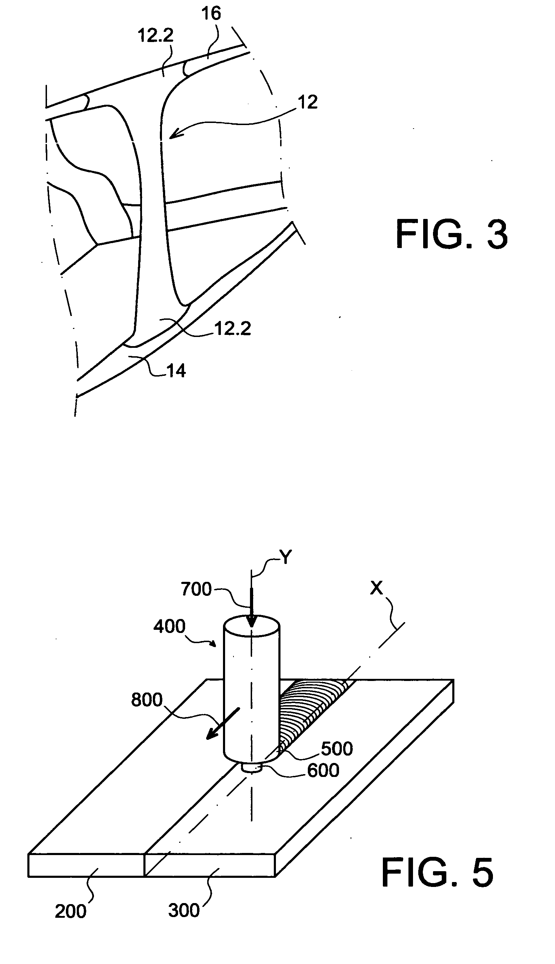

Sur la figure 5, on peut voir un schéma représentant la solidarisation d'une plaque 200 et d'une plaque 300 par raboutage au moyen d'un outil 400 d'axe Y, rotatif de diamètre compris par exemple entre 10 et 15 mm et ayant. L'outil 400 comporte un épaulement 500 et un poinçon 600 en contact avec l'une de pièce sur sa plus grande surface. Les plaques présentent une épaisseur, par exemple comprise entre 0,8 mm et 4mm.

Pour réaliser le raboutage, l'outil 400 se déplace longitudinalement selon un axe X par exemple avec une vitesse de 1 m/min selon la flèche 800, avec une vitesse de rotation autour de son axe Y comprise entre 1500 t/minet 3000 t/min, et en exerçant suivant la flèche 700 un effort selon l'axe de l'outil représenté par la flèche 700 compris entre 500 daN et 1000 daN.

Les parties des plaques 200 et 300 en arrière de l'outil 400 sont déjà reliées par raboutage.

Ce procédé de raboutage permet d'obtenir une tenue mécanique très élevée, notamment au niveau de la zone de raccord. En effet, dans le cas des autres techniques d'assemblage, par soudure ou brasure, la zone de raccord présente des caractéristiques mécaniques inférieures à celles des deux matériaux raccordés. Or, dans le cas du raboutage entre aluminium et acier, la zone de raccord a des propriétés mécaniques au moins aussi élevée que celle de l'aluminium.

Il peut apparaître des défauts de comportement dans le cas où la zone de raboutage est très sollicitée, on peut alors prévoir une conception de pièces particulière limitant les sollicitations dans cette zone.

Le procédé de fabrication d'un longeron selon la présente invention comporte les étapes suivantes :
- raboutage d'une plaque en acier et d'une plaque en alliage d'aluminium,
- emboutissage de la pièce ainsi formée pour obtenir la forme du longeron.

Une étape de découpage peut également être prévue pour ajuster la forme du longeron.

Le choix des matériaux à rabouter est effectué de manière à ce que les matériaux présentent des limites d'élasticité et des épaisseurs relativement proches pour assurer un emboutissage homogène.

Dans le tableau a ci-dessous, on peut voir les caractéristiques mécaniques de l'acier et d'un alliage d'aluminium en fonction de l'épaisseur.

**Tableau a**

| | Epaisseur (mm) | Module d'élasticité (GPa) | Limite élastique (MPa) | Résistance (MPa) |
|---|---|---|---|---|
| Acier | 0,8-4 | 20 | 250-800 | 350-1200 |
| Alliage d'aluminium | 1-5 | 7 | 150-300 | 200-450 |

La pièce de structure selon l'invention est donc allégée et apte à résister à de fortes contraintes, afin d'assurer la sécurité du conducteur et du passager.

La présente invention s'applique également aux longerons arrière.

A titre d'exemple, on peut utiliser un acier du type HE450M, 650, TRIP 800, DP 800, 1000, TWIP, et un alliage d'aluminium du type 6060, 6182, 6008, 7005...

L'alliage d'aluminium 6182 présente une densité de 207, un module d'élasticité de 6,7 GPA, une limite élastique de 250 MPa et une résistance mécanique de 350 MPa.

Sur la figure 3, on peut voir un montant 12 de l'état de la technique disposé entre une portière avant et une portière arrière (non représentées). Le montant se raccorde par une extrémité inférieure 12.1 aux extrémités longitudinales du plancher 14 et par une extrémité supérieure 12.2 à un pavillon de toit 16. La partie médiane 12.3 est la zone susceptible d'être soumise aux plus grandes contraintes de flexion, qui peuvent notamment être provoquées par un choc latéral. Pour cela le montant est réalisé d'un seul tenant en acier embouti, apte à supporter un niveau de charge de flexion imposé.

Les valeurs des contraintes de chocs sont similaires à celles indiquées précédemment pour les chocs frontaux.

Or, ces montants présentent une masse élevée. La présente invention résout ce problème.

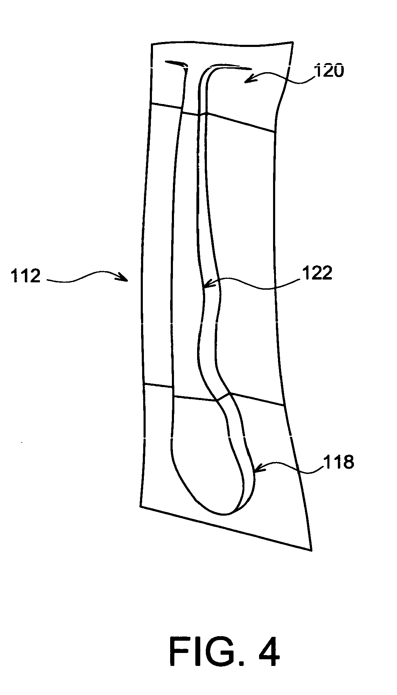

Sur la figure 4, on peut voir un montant 112 selon la présente entre deux portières, s'étendant entre un plancher (non représenté) et un pavillon de toit (non représenté).

Le montant 112 selon la présente invention comporte trois éléments 118, 120, 122.

Le premier élément 118 et le deuxième élément 120 sont réalisés en alliage d'aluminium et sont destinés à se raccorder respectivement au plancher et au pavillon de toit.

Le deuxième élément 122 définissant la partie médiane du montant est en acier.

Les premier 118 et deuxième 120 éléments se raccordent au troisième élément 122 par raboutage, de la même manière que décrite précédemment.

Les zones du montant 112 qui sont peu sollicitées en flexion, i.e. les extrémités longitudinales du montant, sont réalisées en alliage d'aluminium, par contre la zone du montant qui peut être très sollicitée en flexion, i.e. la partie médiane 122, est réalisée en acier.

Ainsi, le montant selon la présente invention offre un niveau de sécurité équivalent, cependant la masse du montant est sensiblement réduite.

Le procédé de réalisation est similaire à celui du longeron, cependant lors de l'étape a) de raboutage, deux plaques en aluminium sont raboutées de part et d'autre d'une plaque centrale en acier.

Par exemple, un montant de l'état de la technique réalisé entièrement en acier a une masse de 3,5 kg. Selon l'invention, grâce à laquelle, environ 60 % de sa masse est réduite de 40, un montant selon l'invention a une masse de 2,5 kg.

La présente invention offre l'avantage supplémentaire de faciliter l'assemblage ultérieur des montants sur des longerons extérieurs tels que des bavolets ou brancard en alliage d'aluminium, puisque il s'agit d'un raccord entre éléments en alliage d'aluminium.

Le montant selon l'invention est donc capable avec une masse réduite de tenir des contraintes mécaniques comme un montant entièrement en acier.

La présente invention s'applique à toutes les pièces de structure qui peuvent être mécaniquement fortement sollicitées.

## Revendications

1. Pièce de structure de forme allongée pour véhicule automobile destinée à supporter une importante contrainte mécanique comportant au moins un élément (102, 118, 120) en alliage d'aluminium et au moins un élément (106, 122) en acier solidarisés par raboutage,
**caractérisé en ce qu'**elle forme un montant destiné à être disposé entre deux portières, comportant deux éléments (118, 120) en alliage d'aluminium formant les extrémités inférieure et supérieure du montant (112) destinées à se raccorder respectivement à une extrémité longitudinale d'un plancher et à un pavillon de toit, et l'élément en acier (122) formant la partie médiane du montant (112).

2. Pièce de structure selon l'une des revendications précédentes, dans laquelle l'alliage d'aluminium a un module d'élasticité d'environ 20 Gpa.

3. Pièce de structure selon l'une des revendications précédentes, dans laquelle l'acier est du type HE 450 M, 650, TRIP 800, DP 800, 1000 ou TWIP, et un alliage d'aluminium de type 606, 6182, 6008 ou 7005.

4. Véhicule automobile comportant au moins une pièce de structure selon l'une des revendications 1 à 3.

5. Véhicule automobile selon la revendication 4, comportant :
- au moins une paire de longerons (101) avant ou arrière dont chacun comporte un élément (102) en alliage d'aluminium qui est sensiblement rectiligne et qui est destiné à être fixé à un pare-choc, et un élément en acier (106) qui est coudé et qui est destiné à être fixé à un plancher (108) du véhicule, solidarisés par raboutage,
et au moins une paire de montants (112) selon la revendication 1.

6. Procédé de fabrication d'une pièce de structure selon l'une des revendications 1 à 5 comportant les étapes :
a) raboutage d'au moins une partie (106, 122) en acier et s'au moins une partie (102, 118, 120) en, alliage d'aluminium,
b) emboutissage des parties raboutées.

7. Procédé de fabrication d'un montant selon la revendication précédente dans laquelle lors de l'étape a) deux parties (118, 120) sont raboutées de part et d'autre de la partie en acier (122).

8. Procédé selon la revendication 6 ou 7, dans laquelle l'étape a) de raboutage s'effectue par soudage par friction en mode translation.

## Claims

1. Structural component of elongate shape for a motor vehicle and intended to withstand a high level of mechanical stress, comprising at least one element (102, 118, 120) made of aluminium alloy and at least one element (106, 122) made of steel which are joined together by butt-joining,
**characterized in that** it forms a post intended to be positioned between two doors, comprising two elements (118, 120) made of aluminium alloy forming the lower and upper ends of the post (112) which are intended to be connected respectively to a longitudinal end of a floor plan and to a roof, and the steel element (122) forming the middle part of the post (112).

2. Structural component according to one of the preceding claims, in which the aluminium alloy has an elastic modulus of around 20 GPa.

3. Structural component according to one of the preceding claims, in which the steel is of the HE 450 M, 650, TRIP 800, DP 800, 1000 or TWIP type, and an aluminium alloy of 606, 6182, 6008 or 7005 type.

4. Motor vehicle comprising at least one structural component according to one of Claims 1 to 3.

5. Motor vehicle according to Claim 4, comprising:
- at least one pair of front or rear frame rails (101) each of which comprises an element (102) made of aluminium alloy which is substantially straight and which is intended to be fixed to a bumper, and an element (106) made of steel which is bent and which is intended to be fixed to a floor plan (108) of the vehicle, these elements being joined together by butt-joining,
and at least one pair of posts (112) according to Claim 1.

6. Method of manufacturing a structural component according to one of Claims 1 to 5, comprising the steps:
a) butt-joining at least one part (106, 122) of steel and at least one part (102, 118, 120) made of aluminium alloy,
b) pressing the butt-jointed parts.

7. Method of manufacturing a post according to the preceding claim in which during step a) two parts (118, 120) are butt-joined one on each side of the steel part (122).

8. Method according to Claim 6 or 7, in which the butt-joining step a) is performed using translation friction welding.

## Patentansprüche

1. Strukturteil mit länglicher Form für ein Kraftfahrzeug, das eine große mechanische Belastung aufnehmen soll und mindestens ein Element (102, 118, 120) aus einer Aluminiumlegierung und mindestens ein Element (106, 122) aus Stahl aufweist, die durch Stumpfstoßen fest verbunden sind,
**dadurch gekennzeichnet, dass** es eine Säule bildet, die zwischen zwei Türen angeordnet werden soll und zwei Elemente (118, 120) aus einer Aluminiumlegierung aufweist, die das untere und das obere Ende der Säule (112) bilden, welche mit einem Längsende eines Bodens bzw. mit einer Dachverkleidung verbunden werden sollen, und wobei das Element (122) aus Stahl den Mittelteil (112) der Säule bildet.

2. Strukturteil nach einem der vorhergehenden Ansprüche, wobei die Aluminiumlegierung ein Elastizitätsmodul von ca. 20 GPa aufweist.

3. Strukturteil nach einem der vorhergehenden Ansprüche, wobei der Stahl vom Typ HE 450 M, 650, TRIP 800, DP 800, 1000 oder TWIP ist und eine Aluminiumlegierung vom Typ 606, 6182, 6008 oder 7005 ist.

4. Kraftfahrzeug, das mindestens ein Strukturteil nach einem der Ansprüche 1 bis 3 aufweist.

5. Kraftfahrzeug nach Anspruch 4, mit:
- mindestens einem Paar Längsträger (101), einem vorderen oder hinteren, von denen jeder ein Element (102) aus einer Aluminiumlegierung, das im Wesentlichen geradlinig ist und das an einem Stoßdämpfer befestigt werden soll, und ein Element (106) aus Stahl, das gekrümmt ist und an einem Boden (108) des Fahrzeugs befestigt werden soll, aufweist, die durch Stumpfstoßen fest verbunden sind,
- und mindestens einem Paar Säulen (112) nach Anspruch 1.

6. Verfahren zur Herstellung eines Strukturteils nach einem der Ansprüche 1 bis 5, das die folgenden Schritte umfasst:
a) Stumpfstoßen mindestens eines Teils (106, 122) aus Stahl und mindestens eines Teils (102, 118, 120) aus einer Aluminiumlegierung,
b) Tiefziehen der stumpfgestoßenen Teile.

7. Verfahren zur Herstellung einer Säule nach dem vorhergehenden Anspruch, wobei bei Schritt a) zwei Teile (118, 120) auf beiden Seiten des Stahlteils (122) stumpfgestoßen werden.

8. Verfahren nach Anspruch 6 oder 7, wobei der Stumpfstoßschritt a) durch Reibschweißen im Translationsmodus erfolgt.
